# EUROPÄISCHE PATENTSCHRIFT

(11) **EP 2 017 155 B1**
(45) Veröffentlichungstag und Bekanntmachung des Hinweises auf die Patenterteilung: **03.04.2013**
(21) Anmeldenummer: 08011993.6
(22) Anmeldetag: 03.07.2008
(51) Int. Cl.: B62B 3/14, G09F 23/06

(54) **Informationseinrichtung**
Information device
Dispositif d'information

(30) Priorität: 20.07.2007 DE 102007034433
(43) Veröffentlichungstag der Anmeldung: 21.01.2009
(73) Patentinhaber: Wanzl Metallwarenfabrik GmbH, 89336 Leipheim (DE)
(72) Erfinder: Daminger, Johann, 89233 Neu-Ulm (DE)

(56) Entgegenhaltungen:
- EP-A1- 1 344 705
- WO-A-97/15039
- DE-U1- 8 702 388
- US-B1- 6 206 471
- US-B1- 6 206 741

## Beschreibung

Die Erfindung betrifft eine Informationseinrichtung zur Anordnung an einem Transportwagen nach dem Oberbegriff des Patentanspruchs 1 der Anmeldung.

Informationseinrichtungen sind aus dem Stand der Technik in Form bekannt, dass sie mit Befestigungsmitteln an eine Schiebeeinrichtung ortsfest oder wechselbar angeordnet werden.

Eine solche ist beispielsweise in der internationalen Patentanmeldung WO 96/30247 beschrieben.

Informationseinrichtungen dieser Art sind jedoch meist sehr groß und stören insbesondere, wenn Kinder in den an den Wagen angeordneten Kindersitzen sitzen.

Daher hat sich die DE 37 17 901 zur Aufgabe gestellt, dass die Informationseinrichtung weniger Platz im Bereich des Kindersitzes wegnehmen soll. Gelöst wird diese Aufgabe erfindungsgemäß durch das Anordnen der Informationseinrichtung nach hinten ragend angeordnet, bezogen auf die Lage der Griffstange und entgegengesetzt zum Verlauf des Warenkorbes.

Auch sind Informationseinrichtungen bekannt, die in die Schiebeeinrichtung integriert sind. Eine solche ist beispielsweise in der deutschen Patentanmeldung DE 198 43 531 A1 beschrieben. Diese Schiebeeinrichtung weist eine Verkleidung auf, die als Informationsträger - insbesondere für Werbung - eingesetzt werden kann. Die Werbefläche hierfür ist jedoch recht klein. Weiterhin ist ein Wechsel verschiedener Werbeflächen umständlich und somit zeitaufwendig.

Auch in der EP 1 344 705 A1 ist die Informationseinrichtung in der Schiebeeinrichtung integriert. Diese wirkt jedoch wieder storend, sobald ein Kind im Kindersitz Sitzt.

Die Aufgabe der Erfindung besteht daher darin, eine verbesserte Informationseinrichtung zur Anordnung an einem Transportwagen aufzuzeigen.

Die Erfindung löst die Aufgabe mit den Merkmalen im Hauptanspruch.

Durch den Einsatz der Weichkomponente kann eine Verletzungsgefahr bei Kindern ausgeschlossen werden. Eine nach hinten ragende Anordnung ist nicht mehr notwendig.

Da das Ober- und/oder Unterteil eine Aufnahme für die Schiebeeinrichtung aufweist, ist eine sichere Anordnung der Informationseinrichtung an der Schiebeeinrichtung gegeben, wodurch weiterhin eine hohe Verdrehsicherheit gegeben ist.

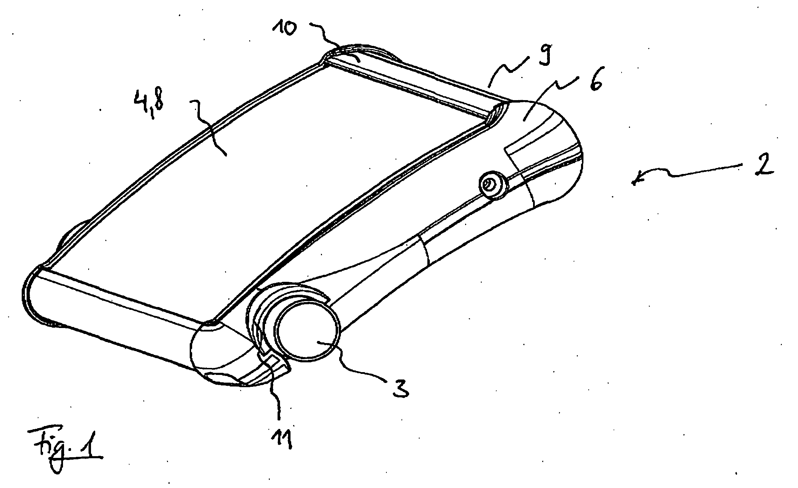

Die Erfindung wird anhand eines Ausführungsbeispiels näher erläutert. Es zeigt
Fig. 1 eine Informationseinrichtung mit Seitenteilen in 3-D-Ansicht;
Fig. 2a die gleiche Informationseinrichtung ohne Seitenteile in 3-D-Ansicht;
Fig. 2b eine vergrößerte Detaildarstellung der Weichkomponente angeordnet am Ende der Informationseinrichtung in 3-D-Ansicht sowie
Fig. 3 ein Seitenteil der Informationseinrichtung.

Die Erfindung betrifft eine Informationseinrichtung 2, die zur Anordnung an einem Transportwagen 1 vorgesehen ist. Jeder Transportwagen 1 ist, wie aus dem Stand der Technik bekannt, mit einer Schiebeeinrichtung 3 ausgestattet. Die Informationseinrichtung 2 weist ein Oberteil 4 und ein Unterteil 5 auf. Es sind Seitenteile 6 am Ober- und Unterteil 4, 5 vorgesehen, die Ober- und Unterteil 4, 5 zusammenhalten. Das Oberteil 4 sieht Vorrichtungen 7 vor, die zur Aufnahme einer Abdeckhaube 8 bestimmt sind. Es kann auch eine Abdeckfolie eingesetzt werden.

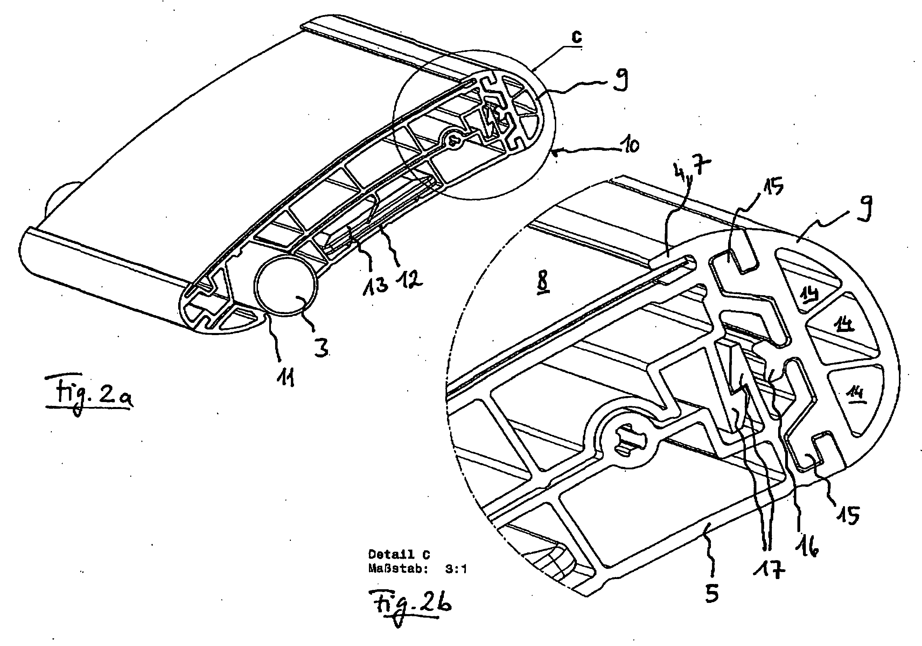

Zwischen Oberteil 4 und Abdeckhaube 8 ist ein Informationsblatt, wie z.B. eine Werbung, einzulegen. Hierbei findet ein Informationsblatt aus Papier, Pappe oder ähnlichem Verwendung. Das Informationsblatt kann wechselbar eingelegt werden. Hierfür sind die Seitenteile 6, die mit Schrauben am Ober- und Unterteil 4, 5 angeordnet sind, zu entfernen. Dann kann die Abdeckhaube 8, die verschiebbar in den Vorrichtungen 7 lagert, heraus geschoben werden. Eine mögliche Ausführung an Vorrichtungen 7 ist aus Figur 2a zu entnehmen.

Figur 2a zeigt die Informationseinrichtung 2 ohne Seitenteile 6. Das Oberteil 4 und das Unterteil 5 ist jeweils einteilig gebildet und dann ineinander geklipst.

Es ist eine Weichkomponente 9 am oberen Ende 10 des Oberteils 4 und/oder des Unterteils 5 angeordnet. In Figur 2a ist die Weichkomponente 9 sowohl am oberen Ende 10 des Oberteils 4, als auch am oberen Ende 10 des Unterteils 5 wechselbar angeordnet.

Die Weichkomponente 9 ist in das Oberteil 4 und das Unterteil 5 einschiebbar. Hierfür sind die Enden 10 des Ober- und Unterteils 4, 5 und die Weichkomponente 9 der Gestalt, dass sie formschlüssig ineinander greifen. Dies ist in vergrößerter Darstellung in Figur 2b aufgezeigt.

Die Weichkomponente 9 hat insbesondere den Sinn, die Verletzungsgefahr für ein Kind, das in einem nicht näher dargestellten Kindersitz eines Transportwagens sitzt, weitest gehend zu verhindern.

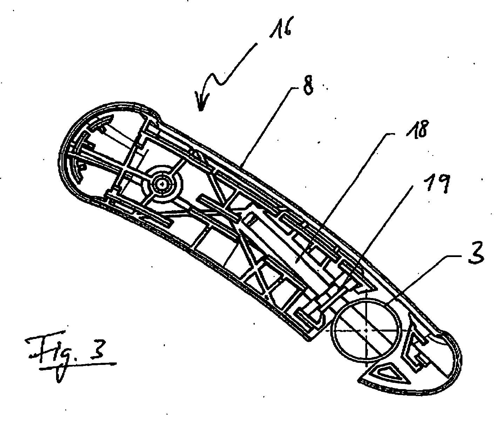

Die Breite der Weichkomponente 9 entspricht der Breite der Informationseinrichtung 2. Vorzugsweise weist die Weichkomponente 9 eine nach außen geformte halbkreisförmige Form auf. Die Weichkomponente 9 kann aus einem Vollmaterial gebildet sein. Es können auch Ausnehmungen 14 vorgesehen werden, wie in den Figuren 2a, b und 3 dargestellt, die einen zusätzlichen Dämpfungseffekt haben.

Die Informationseinrichtung 2 ist durch seine Konstruktion in unterschiedlichen Breiten herstellbar.

Ins Innere gerichtet, zur Aufnahme in die Enden 10 des Ober- und Unterteils 4, 5 weist die Weichkomponente 9 Formteile 15, 16 auf. Je nach Form der Enden 10 können die Formteile 15 baugleich, sinnvollerweise jedoch gespiegelt zueinander ausgebildet sein. Im in Figur 2b dargestellten Beispiel ist jedes Formteil 15 abgewinkelt ausgeführt, es weist eine U-förmige Gestalt auf, die eine formschlüssige Aufnahme des Endes 10 des Oberteils 4, bzw. des Unterteils 5 gewährleistet.

Der Spalt zwischen dem Oberteil 4 und dem Unterteil 5 ist durch das Formteil 16 ausgefüllt. Dieses ist entsprechend dem Abstand zwischen Ober- und Unterteil 4, 5 ausgeführt und weist an seinem Ende einen breiten Querschnitt auf. Dies bewirkt eine zusätzliche Sicherung und bietet die Möglichkeit, die Weichkomponente 9 entlang dem Ende 10 des Ober- und Unterteils 4, 5 zu schieben.

Wie in den Figuren 2 a, b und 3 dargestellt, weisen das Ober- und das Unterteil 4, 5 am oberen Ende 10 jeweils einen Haken 17 auf. Die Haken 17 sind hierbei so ausgeführt, dass sie ineinander greifen und eine Fixierung beider Teile 4, 5 bewirken. Die Verwendung weiterer Haken 17 oder anderer Fixierungselemente bleibt dem Fachmann überlassen.

Weiterhin weist das Oberteil 4 und/oder das Unterteil 5 eine Aufnahme 11 für die Schiebeeinrichtung 3 auf. Diese Aufnahme 11 ist in der unteren Hälfte der Informationseinrichtung 2 vorgesehen.

Es bietet sich die Aufnahme eines Transponders 13 an. Hierfür ist das Oberteil 4 oder das Unterteil 5 mit einer Aufnahme 12 ausgestattet.

In einer weiterführenden Variante ist die Weichkomponente 9 kein zusätzliches Bauteil, sondern am oberen Ende 10, als so genannte Co-Extrusion, an-extrudiert.

Am Oberteil 4 kann eine nicht näher dargestellte Zettelklemme vorzusehen sein.

Vorzugsweise ist die Informationseinrichtung 2 wechselbar mit Schrauben 18 an der Schiebeeinrichtung 3 angeordnet. Mittels einer in einem Seitenteil 6 vorgesehenen Mutter 19 kann die Informationseinrichtung 2 an der Schiebeeinrichtung 3 gesichert werden. Die Anordnung der Schraube 18 ist Fig. 3 zu entnehmen.

Weiterhin ist vorgesehen, dass die Seitenteile 6 und das Ober- und/oder Unterteil 4, 5 mittels einer weiteren Schraube 18' gesichert sind. Hierfür weist jedes Seitenteil 6 eine Bohrung und jedes Ober- und/oder Unterteil 4, 5 an jeder Seite eine Aufnahme für die Schraube 18' auf.

### Bezugszeichenliste

- 1: Transportwagen
- 2: Informationseinrichtung
- 3: Schiebeeinrichtung
- 4: Oberteil
- 5: Unterteil
- 6: Seitenteil
- 7: Vorrichtungen zur Aufnahme einer Abdeckhaube
- 8: Abdeckhaube
- 9: Weichkomponente
- 10: oberen Ende
- 11: Aufnahme für die Schiebeeinrichtung
- 12: Aufnahme für einen Transponder
- 13: Transponder
- 14: Ausnehmungen
- 15: Formteil
- 16: Formteil
- 17: Haken
- 18: Schraube
- 18': weitere Schraube
- 19: Mutter

## Patentansprüche

1. Informationseinrichtung (2) zur Anordnung an einem Transportwagen (1), wobei jeder Transportwagen (1) mit einer Schiebeeinrichtung (3) ausgestattet ist, mit einem Oberteil (4) und einem Unterteil (5), mit Seitenteilen (6), wobei das Oberteil (4) Vorrichtungen (7) zur Aufnahme einer Abdeckhaube (8) aufweist, und wobei das Oberteil (4) und das Unterteil (5) ineinander geklipst sind, **dadurch gekennzeichnet, dass** eine Weichkomponente (9) am oberen Ende (10) des Oberteils (4) und/oder des Unterteils (5) angeordnet ist, wobei die Weichkomponente (9) am Oberteil (4) und/oder am Unterteil (5) einschiebbar ist.

2. Informationseinrichtung nach Anspruch 1, **dadurch gekennzeichnet, dass** das Oberteil (4) und/oder das Unterteil (5) eine Aufnahme (11) für die Schiebeeinrichtung (3) aufweist.

3. Informationseinrichtung nach den Ansprüchen 1 bis 2, **dadurch gekennzeichnet, dass** das Oberteil (4) oder das Unterteil (5) mit einer Aufnahme (12) für einen Transponder (13) ausgestattet ist.

## Claims

1. An information device (2) for arrangement on a trolley (1), wherein each trolley (1) is equipped with a pushing arrangement (3), having an upper part (4) and a lower part (5), with lateral parts (6), wherein the upper part (4) has devices (7) to receive a covering hood (8), and wherein the upper part (4) and the lower part (5) are clipped intro one another, **characterised in that** a soft component (9) is arrange at the upper end (10) of the upper part (4) and/or of the lower part (5), wherein the soft component (9) is insertable at the upper part (4) and/or at the lower part (5).

2. An information device according to claim 1, **characterised in that** the upper part (4) and/or the lower part (5) has/have a receptacle (11) for the pushing arrangement (3).

3. An information device according to claims 1 to 2, **characterised in that** the upper part (4) or the lower part (5) is equipped with a receptacle (12) for a transponder (13).

## Revendications

1. Dispositif d'information (2) conçu pour être installé sur un chariot de transport (1), chaque chariot de transport (1) étant équipé d'un système de poussée (3), ledit dispositif comprenant une partie supérieure (4), une partie inférieure (5) et des parties latérales (6), ladite partie supérieure (4) étant munie de dispositifs (7) de réception d'une coiffe de recouvrement (8), et ladite partie supérieure (4) et ladite partie inférieure (5) étant clipsées l'une dans l'autre, **caractérisé par le fait qu'**une pièce structurelle ou composante molle (9) est placée à l'extrémité supérieure (10) de la partie supérieure (4) et/ou de la partie inférieure (5), ladite pièce structurelle ou composante molle (9) pouvant être insérée au niveau de ladite partie supérieure (4) et/ou au niveau de ladite partie inférieure (5).

2. Dispositif d'information selon la revendication 1, **caractérisé par le fait que** la partie supérieure (4) et/ou la partie inférieure (5) présente(nt) un logement (11) pour le système de poussée (3).

3. Dispositif d'information selon les revendications 1 à 2, **caractérisé par le fait que** la partie supérieure (4) ou la partie inférieure (5) est dotée d'un logement (12) pour un transpondeur (13).
